# EUROPÄISCHE PATENTSCHRIFT

(11) **EP 3 633 466 B1**
(45) Veröffentlichungstag und Bekanntmachung des Hinweises auf die Patenterteilung: **24.11.2021**
(21) Anmeldenummer: 18197960.0
(22) Anmeldetag: 01.10.2018
(51) Int. Cl.: G05B 15/02

(54) **VERFAHREN UND GEBÄUDEMANAGEMENTSYSTEM ZUM DARSTELLEN VON STATUSINFORMATIONEN EINES GEBÄUDES**
METHOD AND BUILDING MANAGEMENT SYSTEM FOR DISPLAYING STATE INFORMATION OF A BUILDING
PROCÉDÉ ET SYSTÈME DE GESTION DE BÂTIMENT DESTINÉ À PRÉSENTER DES INFORMATIONS D'ÉTAT D'UN BÂTIMENT

(43) Veröffentlichungstag der Anmeldung: 08.04.2020
(73) Patentinhaber: Siemens Schweiz AG, 8047 Zürich (CH)
(72) Erfinder: Ambühl, Stefan, 8706 Meilen (CH); Lustenberger, Christof, 6204 Sempach (CH)
(74) Vertreter: Maier, Daniel Oliver

(56) Entgegenhaltungen:
- EP-A1- 3 309 632
- US-A1- 2013 275 908
- US-A1- 2017 115 642

## Beschreibung

Die Erfindung betrifft ein Verfahren zum Darstellen von Statusinformationen eines Gebäudes. Weiterhin betrifft die Erfindung ein Gebäudemanagementsystem, eingerichtet zum Darstellen von Statusinformationen eines Gebäudes.

Insbesondere in grösseren Gebäuden gibt es heute immer mehr technische Systeme, welche die gesamte Gebäudetechnik steuern und überwachen. Diese Technik entwickelt sich immer weiter, wird immer automatisierter und komplexer. Um trotzdem den Überblick zu behalten und in kritischen Situationen richtig reagieren zu können, gibt es unterschiedlichste Gebäudemanagementplattformen, welche die Arbeit im Alltag des technischen Gebäudemanagements unterstützen und vereinfachen.

Im technischen Gebäudemanagement werden insbesondere die beiden Bereiche Gebäudeautomation und Sicherheit unterschieden, die entweder in getrennten oder auch in einem gemeinsamen System abgebildet werden. Dabei werden alle Subsysteme eines Gebäudes, d. h. (HLK-Anlagen, Licht- und Storensteuerungen und Raumautomation aus der Gebäudeautomation sowie Brand- und Einbruchmeldeanlagen, Zutrittskontrollsysteme, Videoüberwachung oder technische Kontakte aus dem Sicherheitsbereich, in die Gebäudemanagementplattform integriert.

Die Integration auf einer einheitlichen Plattform erlaubt ein direktes Bedienen und Beobachten der oben genannten Bereiche von einer zentralen Stelle aus.

Die amerikanische Patentanmeldung US20170115642A1 offenbart ein Gebäudeautomationssystem (BAS) mit einem BAS-BIM-Integrator zur Integration von BAS-Datenpunkten in einem Gebäudeinformationsmodell (BIM), wobei das Gebäudeautomationssystem einen BAS-BIM-Viewer umfasst, zur grafischen Darstellung von BIM-Objekten und integrierten BAS-Datenpunkten

Die amerikanische Patentanmeldung US20130275908A1 offenbart einen Mechanismus zur Abbildung von Daten zwischen verschiedenen Hierarchien innerhalb eines industriellen Automatisierungssystems, wobei die Abbildung einer Dateninstanz innerhalb eines ersten hierarchischen Baumes zu einer Instanz der Daten innerhalb eines zweiten hierarchischen Baumes erfolgt.

Die europäische Patentanmeldung EP3309632A1 offenbart eine Methode zur automatischen Durchführung von einer Konfiguration oder Neukonfiguration in einem Gebäudeautomatisierungssystem während der Laufzeit basierend auf Informationen oder Daten aus einem Informationsmodell, in dem Informationen oder Daten in maschinenlesbarer Form verfügbar sind.

Die Anzeige von Statusinformationen des Gebäudes, wie z.B. Raumbelegung, Raumtemperaturen, Raumenergieverbrauch, benötigt aber relativ viel Konfigurationsaufwand.

Es ist daher die Aufgabe der vorliegenden Erfindung, ein effizientes Verfahren zum Darstellen von Statusinformationen eines Gebäudes ein bereitzustellen.

Die Aufgabe wird gelöst durch ein Verfahren zum Darstellen von Statusinformationen eines Gebäudes gemäß Anspruch 1.

In einem digitalen Gebäudeinformationsmodell werden die Bauwerksdaten (wie z.B. die Anordnung der Räume auf den einzelnen Stockwerken; die verwendeten Baumaterialien; die Gewerke im Gebäude; die in den Räumen, Gängen, Treppen verbaute Infrastruktur und dazugehörige Steuerungen (Hardware und Software) modelliert und in Beziehung zueinander gesetzt. Dies erfolgt in einer geeigneten Notation, z.B. in IFC oder in einem anderen geeigneten Objektmodell. Mit Vorteil wird das digitale Gebäudeinformationsmodell in einem geeigneten Speichermedium bzw. Datenbank hinterlegt, für einen Zugriff durch einen Benutzer (z.B. Architekt) bzw. durch einen Computer oder ein Softwareprogramm. Z.B. Gebäudeautomatisierungssystem mit entsprechender Software. Im Gebäudeinformationsmodell (BIM) werden die Geräte des Gebäudes durch eine entsprechende Notation modelliert und repräsentiert.

Projektkonfigurationen für eine Gebäudeautomatisierung werden üblicherweise durch geeignete Engineeringwerkzeuge (Engineering Tool, z.B. ETS (Engineering Tool Software) für die Einbindung von KNX-Geräten in den Konnex-Installationsbus). Insbesondere werden bei einer Projektkonfiguration für eine Gebäudeautomatisierung entsprechende Datenpunkte definiert und in Beziehung zueinander gesetzt. Ein Datenpunkt wird über eine Datenpunktadresse identifiziert bzw. angesprochen. Es wird zwischen physikalischen und virtuellen Datenpunkten unterschieden. Ein physikalischer Datenpunkt ist auf ein angeschlossenes oder vernetztes Gerät bzw. Feldgerät bezogen. Ein virtueller Datenpunkt ist von zusammengehörigen physikalischen Datenpunkten (z.B. physikalischen Datenpunkten eines komplexen Gerätes) abgeleitet (z.B. durch eine entsprechende Verarbeitungsfunktion (z.B. Mittelwertbildung)).

Das Verknüpfen der Datenpunkte mit den jeweiligen Geräten des Gebäudeinformationsmodells erfolgt mit Vorteil automatisch durch einen geeigneten Abbildungsalgorithmus bzw. basierend auf einer geeigneten Abbildungsfunktion. Mit Vorteil basiert das Verknüpfen der Datenpunkte mit den jeweiligen Geräten des Gebäudeinformationsmodells auf einer "unscharfen Suche" (Fuzzy-Suche, Fuzzy String Matching Algorithmus, Fuzzy Logic Matching Algorithmus). Dabei werden Datenpunkte mit Geräten bzw. Feldgeräten verknüpft, wenn sie gleiche oder nur ein wenig abweichende Bezeichnungen haben. Mit Vorteil werden für die Bezeichnung der Datenpunkte in der Projektkonfiguration und für die Bezeichnungen der Elemente im Gebäudeinformationsmodell (BIM) reguläre Ausdrücke mit demselben Zeichenvorrat verwendet mit einer entsprechenden Syntax und Grammatik verwendet. Das Verknüpfen der Datenpunkte mit den entsprechenden Objekten im Gebäudeinformationsmodell (BIM) erfolgt z.B. über entsprechende Parser oder lexikalische Scanner.

Das Auswählen der Darstellungsform erfolgt durch einen Benutzer (z.B. Servicepersonal in einem Gebäudeleitstand, Facilitymanager), z.B. X-Ray-Darstellung, 3D-Sicht des gesamten Gebäudes, 2D-Sicht je Stockwerk. Auch kann durch den Benutzer bei der Darstellung eine Statuswahl erfolgen: Energie, Temperatur, Belegung, Licht. In Abhängigkeit der Statuswahl werden die Werte der entsprechenden Datenpunkte grafisch (z.B. durch eine entsprechende Farbkodierung) in der ausgewählten Darstellungsform dargestellt. Das Auswählen durch den Benutzer erfolgt über eine geeignet Schnittstelle, mit Vorteil grafische Schnittstelle mit entsprechenden Symbolen bzw. Steuerelementen.

Das Darstellen der Darstellungsform erfolgt auf einem geeigneten Ausgabegerät, z.B. Monitor, Bildschirm eines Computers, einer Leitstelle, eines Gebäudemanagementsystems, eines Tablet-Computers oder eines geeigneten mobilen Kommunikationsendgerätes (z.B. Smartphone). Die Darstellung auf dem Ausgabegerät erfolgt mit Vorteil in 3D Sicht bzw. in dreidimensionaler Graphik mit räumlicher Darstellung in einem entsprechenden Koordinatensystem bzw. mit geeigneten Volumenmodellen. Das Ausgabegerät bzw. der dazugehörige Computer sind dabei mit geeigneter Hardware und Software ausgestattet (z.B. Graphikkarten, 3D-Grafiksoftware, Grafik-Engines).

Eine erste vorteilhafte Ausgestaltung der Erfindung liegt darin, dass das Verknüpfen der Datenpunkte auf die jeweiligen Geräte des Gebäudeinformationsmodells über einen Vergleich der Notation der Datenpunkte mit der Notation der jeweiligen Geräte des Gebäudeinformationsmodells erfolgt. Mit Vorteil wird für die Bezeichnung der Datenpunkte und der Elemente des Gebäudeinformationsmodells eine abgestimmte Terminologie verwendet, z.B. ein Styleguide oder eine Richtlinie mit entsprechenden Regeln. Das Verknüpfen der Datenpunkte Objekten des Gebäudeinformationsmodells kann auch über jeweils zugeordnete Attribute oder tags erfolgen.

Eine weitere vorteilhafte Ausgestaltung der Erfindung liegt darin, dass die Datenpunkte in Echtzeit bereitgestellt werden. Dadurch kann das dargestellte Modell insbesondere zur Überwachung und zur operativen Kontrolle der Gebäudeinfrastruktur verwendet werden.

Eine weitere vorteilhafte Ausgestaltung der Erfindung liegt darin, dass das Gebäudeinformationsmodells (BIM) in IFC-Notation (Industry Foundation Classes) hinterlegt ist. Durch die genormte Darstellung in IFC-Notation ist eine Weiterverarbeitung und ein Datenaustausch leicht möglich.

Eine weitere vorteilhafte Ausgestaltung der Erfindung liegt darin, dass die Schritte Auswählen, Abbilden, und Darstellen der ausgewählten Datenpunkte durch ein Gebäudemanagementsystem erfolgt. Dies kann z.B. durch eine Managementstation in einer Gebäudeleitstelle erfolgen.

Eine weitere vorteilhafte Ausgestaltung der Erfindung liegt darin, dass im Falle, dass der Wert eines Datenpunktes einen Alarm darstellt, das durch den Alarm betroffene Gerät im Gebäudeinformationsmodell optisch hervorgehoben wird. Mit Vorteil erfolgt dies mit zum Alarm gehörigen spezifischen Informationen. Ein Servicemitarbeiter weiss somit, welches Gerät vom Alarm betroffen ist, und bekommt Hinweise, welche Werkzeuge zur Behebung erforderlich sind.

Eine weitere vorteilhafte Ausgestaltung der Erfindung liegt darin, dass das Darstellen der Datenpunkte raumspezifisch erfolgt. Somit können für einen spezifischen Raum relevante Datenpunkte ausgewählt und für diesen Raum im Modell grafisch dargestellt werden.

Eine weitere vorteilhafte Ausgestaltung der Erfindung liegt darin, dass ein Nachführen der Projektkonfiguration in Abhängigkeit von Änderungen des Gebäudeinformationsmodells (BIM) erfolgt. Somit ist es möglich z.B. das Einsetzen von neuen Wänden, eine andere Raumzuordnung von Leuchten, oder eine individuelle Regelung der Räume nach Änderungen automatisch im dargestellten Modell zu berücksichtigen.

Eine weitere vorteilhafte Ausgestaltung der Erfindung liegt darin, dass, basierend auf entsprechenden Daten des Gebäudeinformationsmodells (z.B. Raumvolumen, Isolationswerte der Materialien) und aktuellen und historischen Werten von Datenpunkten Aussagen zum Energieverbrauch im Gebäude grafisch dargestellt werden. Dadurch kann eine Prognose (Forecast) zu einem zu erwartenden Energieverbrauch grafisch dargestellt werden.

So kann z.B. im dargestellten Modell ein stockwerkspezifischer Vergleich eines zu erwartenden Energieverbrauchs grafisch dargestellt werden. Weiterhin können Energieverluste grafisch erkannt und grafisch dargestellt werden.

Die Aufgabe wir weiterhin gelöst durch ein Gebäudemanagementsystem gemäß Anspruch 8.

Dadurch kann das infrastrukturelle Gebäudemanagement (z.B. Systeme zur Instandhaltung des Gebäudes, Facility-Management-System (FMS) für den Unterhalt der technischen Einrichtungen im Gebäude) und das technische Gebäudemanagement (Gebäudeautomation, HLK-Anlagen, Licht und Energieoptimierung im Gebäude) grafisch und visuell in Bezug gestellt und dargestellt werden. Z.B. auf einer Managementstation in einer Gebäudeleitstelle.

Eine weitere vorteilhafte Ausgestaltung der Erfindung liegt darin, dass das Verknüpfen der ausgewählten Datenpunkte auf die jeweiligen Geräte des Gebäudeinformationsmodells über einen Vergleich der Notation der Datenpunkte mit der Notation der jeweiligen Geräte des Gebäudeinformationsmodells erfolgt. Das Verknüpfen der ausgewählten Datenpunkte mit den jeweiligen Geräten des Gebäudeinformationsmodells erfolgt mit Vorteil automatisch durch einen geeigneten Abbildungsalgorithmus bzw. basierend auf einer geeigneten Abbildungsfunktion. Mit Vorteil basiert das Verknüpfen der Datenpunkte mit den jeweiligen Geräten des Gebäudeinformationsmodells auf einer "unscharfen Suche" (Fuzzy-Suche, Fuzzy String Matching Algorithmus, Fuzzy Logic Matching Algorithmus). Dabei werden Datenpunkte mit Geräten bzw. Feldgeräten verknüpft, wenn sie gleiche oder nur ein wenig abweichende Bezeichnungen haben. Mit Vorteil werden für die Bezeichnung der Datenpunkte in der Projektkonfiguration und für die Bezeichnungen der Elemente im Gebäudeinformationsmodell (BIM) reguläre Ausdrücke mit demselben Zeichenvorrat verwendet mit einer entsprechenden Syntax und Grammatik verwendet. Das Verknüpfen der Datenpunkte mit den entsprechenden Objekten im Gebäudeinformationsmodell (BIM) erfolgt z.B. über entsprechende Parser oder lexikalische Scanner. Anstelle der Notation (Bezeichnung) können auch Attribute oder tags (der Datenpunkte bzw. der Objekte im Gebäudemodell, die die Geräte repräsentieren) für eine Verknüpfung verwendet werden.

Mit Vorteil ist das Ausgabegerät (z.B. Monitor, Bildschirm, Display eines mobilen Kommunikationsendgerätes (z.B. Tablet-Computer, Smartphone) Teil einer Gebäudeleitstation.

Die Erfindung sowie vorteilhafte Ausführungen der vorliegenden Erfindung werden am Beispiel der nachfolgenden Figur erläutert. Dabei zeigen:
- FIG 1: ein beispielhaftes Diagramm für eine vorteilhafte Ausgestaltung der vorliegenden Erfindung,
- FIG 2: eine erste beispielhafte Darstellungsform für eine grafische Ausgabe auf einem Ausgabegerät,
- FIG 3: eine zweite beispielhafte Darstellungsform für eine grafische Ausgabe auf einem Ausgabegerät,
- FIG 4: eine dritte beispielhafte Darstellungsform für eine grafische Ausgabe auf einem Ausgabegerät, und
- FIG 5: ein beispielhaftes Flussdiagramm für ein Verfahren zum Darstellen von Statusinformationen eines Gebäudes.

Die Anzeige von Statusinformationen für ein Gebäude, z.B. Raumbelegung, Raumtemperaturen, Raumenergievebrauch etc. benötigt relativ viel Konfigurationsaufwand. Meist muss von Hand ein alphanumerischer oder graphischer Report zusammengestellt werden. Zum Beispiel sind bei einer Gebäudeleitstation all diese Informationen in Form von Datenpunkten vorhanden, sie müssen jedoch anhand der Beschreibungstexte zusammengeführt werden. Der Benützer muss seinerseits den richtigen Report auswählen und gegebenenfalls mit entsprechenden Filterkriterien dafür sorgen, dass die Werte für die von ihm gewünschten Räume angezeigt werden. Es ist sinnvoll, wenn der Benützer einfach und übersichtlich alle relevanten Werte in einer geeigneten Darstellung visualisiert sehen könnte.

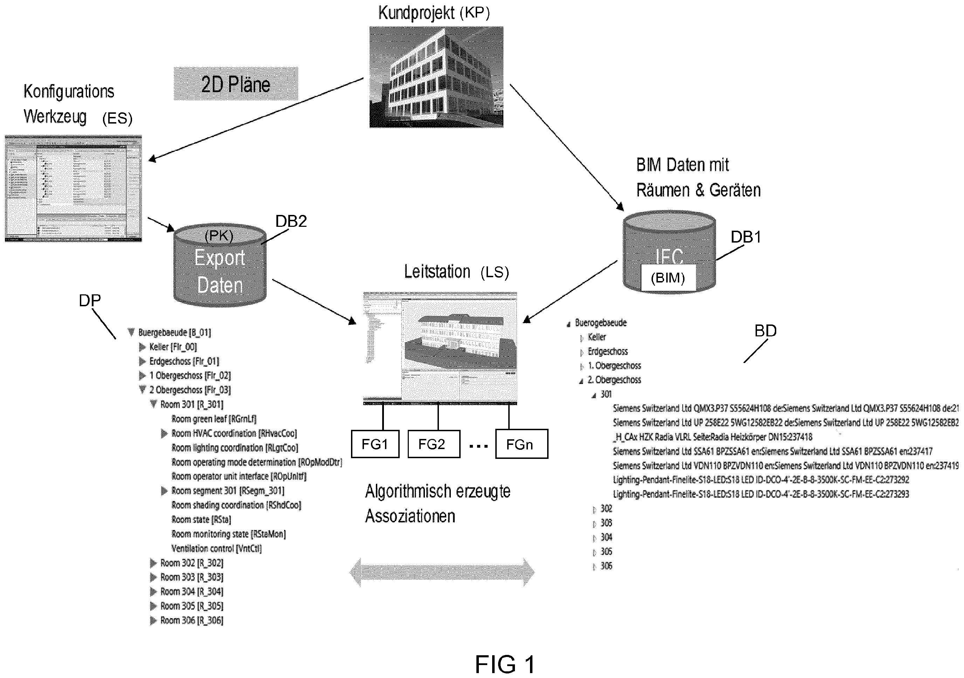

Die Datenpunktwerte der Leitstation werden bis jetzt üblicherweise in alphanumerischen oder graphischen Reports zusammengetragen. Dies bedeutet jeweils einen beträchtlichen Aufwand. Bei der graphischen Darstellung werden vielfach sogenannte Floorplans gezeichnet, entweder manuell oder durch Import von AutoCAD Plänen vom Architekten. Dann müssen die Räume manuell mit den Datenpunkten verknüpft werden. Nun können für die Räume in der graphischen Darstellung Werte wie z.B. Raumbelegung, Raumtemperaturen, Raumenergieverbrauch, Angabe von offenen Festern, brennendem Licht, angezeigt werden. Bei den alphanumerischen Reports kann unter der Verwendung von Report-Templates der Aufwand für das Erstellen der Reports reduziert werden. Die Voraussetzung dazu sind korrekte Raum- und Stockwerkbezeichnung bei den Datenpunkten. Der Benutzer kann durch Eingabe der richtigen Filter die für ihn wichtigen Angaben zusammenstellen. Die alphanumerische Darstellung ist nicht so übersichtlich wie die graphische Darstellung Figur 1 zeigt ein beispielhaftes Diagramm für eine vorteilhafte Ausgestaltung der vorliegenden Erfindung. In jüngster Zeit erhält man vom Architekten, Bauingenieur oder vom Kunden immer mehr 3-dimensionale Pläne gemäss der BIM (Building Information Modeling) Spezifikation. Mit Vorteil werden diese BIM-Spezifikationen, die Bauwerksdaten BD (z.B. Daten zu Räumen, Gewerken, Stockwerken, verbauten Geräten, Feldgeräten im Gebäude) umfassen, in IFC-Notation in einem geeignetem Speicher eines Computers oder in einer geeigneten Datenbank DB1 (z.B. relationale Datenbank, IN-Memory-Datenbank) hinterlegt.

Dank der Verwendung von Standards (z.B. IFC), findet man immer mehr auch Software, die BIM Daten graphisch darstellen kann. Insbesondere ist auch Open Source Software erhältlich, welche erlaubt einen solchen 3D Viewer entsprechend zu erweitern. Der grosse Vorteil einer BIM basierten Spezifikation (z.B. in Industry Foundation Classes der buildingSMART Organisation) ist die Tatsache, dass im Gebäudemodell auch die Räume modelliert sind.

Der Erfindung liegt insbesondere die Idee zugrunde, eine Verknüpfung zwischen den 3D dargestellten Räumen und den zu den Räumen gehörenden Datenpunkten der Leitstation zu erreichen, um mit Hilfe des 3D Viewers sehr mächtige Informationsangaben und Statusangaben zu einem Gebäude zu visualisieren. Der Benutzer kann mit Hilfe des 3D Viewers z.B. sehr schnell alle Seiten des Gebäudes anschauen und sich einen Überblick über die Temperaturverteilung im Gebäude beschaffen.

In der gleichen Form können z.B. weitere Informationen pro Raum oder Stockwerk mitgeteilt bzw. angezeigt werden, z.B. Energieverbrauch, brennendes Licht, offene Fenster (Fensterkontakt), präsente Personen (Präsenzdetektor), Storenpositionen, Alarmzustände, Betriebszustände der Feuersensoren, Abweichung von der Solltemperatur etc.

Die Darstellung gemäss Figur 1 zeigt einen beispielhaften Engineering Workflow zur Realisierung der vorliegenden Erfindung. Ein wichtiger Aspekt der vorliegenden Erfindung ist die automatische Verknüpfung der BIM Daten mit den Datenpunkten der Leitstation bzw. einer Projektkonfiguration. Für die Programmierung der Raumkontroller erhält der Projektingenieur die Gebäudepläne vom Kunden (evtl. auch aus den BIM Daten). Anhand von diesen wird er im Konfigurationstool ES (z.B. ein für die Gebäudeautomatisierung geeignetes Engineeringsystem) eine Hierarchie mit Gebäude, Stockwerken und Räumen aufbauen. Mit Vorteil werden im Konfigurationstool ES dazu die gleichen oder ähnliche Stockwerk- und Raumbezeichner wie in der BIM-Spezifikation verwendet. Die Bezeichnungen der Räume könnten trotzdem leicht unterschiedlich sein, weil z.B. noch Buchstaben verwendet werden. Die vom Konfigurationswerkzeug ES erstellten Projektdaten mit den Datenpunkten DP für ein Kundenprojekt KP werden mit Vorteil in einer geeigneten Datenbank DB2 z.B. als Exportdaten gespeichert und von dort in die Leitstation LS importiert. Dies ist auf dem linken Pfad (Engineeringpfad) von Figur 1 dargestellt.

Der rechte Pfad von Figur 1 stellt die BIM Welt dar. Die BIM-Spezifikationen mit den für das Kundenprojekt KP modellierten Bauwerksdaten BD werden in einer geeigneten Datenbank DB1 (z.B. relationale Datenbank, IN-Memory-Datenbank) hinterlegt, mit Vorteil in IFC-Notation. Die BIM-Spezifikationen für das Kundenprojekt KP werden z.B. vom Kunden für ein Kundenprojekt KP als IFC Datei zur Verfügung gestellt und in der Datenbank DB1 abgelegt. Die BIM Daten werden in die Leitstation LS eingelesen.

### Beispielhafte Datenpunkte DP für das Kundenprojekt KP:

∇ Buerogebäude [B_01]
> Keller [Flr_00]
> Erdgeschoss [Flr_01]
> 1 Obergeschoss [Flr_02]
∇ 2 Obergeschoss [Flr_03]
   ∇ Room 301 [R_301]
      Room green leaf [RGrnLf]
      > Room HVAC coordination [RHvacCoo]
         Room lighting coordination [RLgtCoo]
         Room operating mode determination [ROpModDtr]
         Room operator unit interface [ROpUnitf]
      > Room segment 301 [RSegm_301]
         Room shading coordination [RShdCoo]
         Room state [RSta]
         Room monitoring state [RStaMon]
         Ventilation control [VntCtl]
   > Room 302 [R_302]
   > Room 303 [R_303]
   > Room 304 [R_304]
   > Room 305 [R_305]
   > Room 306 [R_306]

### Beispielhafte Bauwerksdaten BD im Gebäudeinformationsmodell (BIM) für das Kundenprojekt KP:

∇ Buerogebäude
> Keller
> Erdgeschoss
> 1. Obergeschoss
∇ 2. Obergeschoss
   ∇ 301
      Siemens Switzerland Ltd QMX3.P37 ...
      Siemens Switzerland Ltd UP 258E22 ...
      _H_CAx HZK Radia VLRL ...
      Siemens Switzerland Ltd SSA61 ...
      Siemens Switzerland Ltd VDN110 ...
      Lighting-Pendant Finelite-S18-LED:S18 ...
      Lighting-Pendant Finelite-S18-LED:S18 ...
   > 302
   > 303
   > 304
   > 305
   > 306

"Siemens Switzerland Ltd QMX3.P37 ...", "Siemens Switzerland Ltd UP 258E22 ...", "_H_CAx HZK Radia VLRL ...", "Siemens Switzerland Ltd SSA61 ...", "Siemens Switzerland Ltd VDN110 ...", "Lighting-Pendant Finelite-S18-LED:S18 ...", und "Lighting-Pendant Finelite-S18-LED:S18 ..." stellen Bezeichnungen für im Raum 301 verbaute Infrastruktur (z.B. Geräte, Feldgeräte) dar.

In der Leitstation LS werden die BIM Daten mit den dazugehörigen Datenpunkten DP verknüpft und in Assoziation gesetzt. In der Leitstation LS kann für ein Kundenprojekt LP eine Hierarchie mit Gebäude, Stockwerken und Räumen aufbaut werden. Mit Hilfe eines Fuzzy Logik Matching Algorithmus kann man die Assoziationen von Datenpunkten der Leitstation, die Räume repräsentieren, und den eigentlich Räumen in den BIM Daten erstellen. Z.B. enthalten der Raum 302 in beiden Welten die Ziffernfolge "302" ("R_302" und "302"). Mit Vorteil basiert das Verknüpfen der Datenpunkte mit den jeweiligen Geräten des Gebäudeinformationsmodells auf einer "unscharfen Suche" (Fuzzy-Suche, Fuzzy String Matching Algorithmus, Fuzzy Logic Matching Algorithmus). Dabei werden Datenpunkte mit Geräten bzw. Feldgeräten verknüpft, wenn sie gleiche oder nur ein wenig abweichende Bezeichnungen haben. Mit Vorteil werden für die Bezeichnung der Datenpunkte in der Projektkonfiguration und für die Bezeichnungen der Elemente im Gebäudeinformationsmodell (BIM) reguläre Ausdrücke mit demselben Zeichenvorrat verwendet mit einer entsprechenden Syntax und Grammatik verwendet. Das Verknüpfen der Datenpunkte mit den entsprechenden Objekten im Gebäudeinformationsmodell (BIM) erfolgt z.B. über entsprechende Parser oder lexikalische Scanner.

Mit Vorteil werden die Datenpunkte DP in Echtzeit von im Gebäude verbauten Feldgeräten FG1 - FGn bereitgestellt. Somit kann eine aktuelle Situation im Gebäude visualisiert dargestellt und beobachtet werden.

Mit Vorteil werden die in den BIM Daten vorhandenen Geräte mit den entsprechenden Datenpunkten DP der Leitstation LS verknüpft. In den meisten Fällen genügt dazu eine Tabelle, welche den Datenpunkt Typ (z.B. Temperatur Sensor) mit dem Typ in den BIM Daten vergleicht. Geht man davon aus, dass es pro Raum nur einen Temperaturfühler gibt, ist eine eindeutige Abbildung möglich. Dies erlaubt dann Lösungen, wo man sich virtuell im Viewer durch das Gebäude bewegt, Geräte anwählen kann und aktuelle Werte dazu erhält. Zudem kann man solche Geräte auch bedienen.

Die Neuheit dieser Erfindung ist insbesondere die Idee, die 3D Sicht des Gebäudes zur Statusanzeige von Raumdaten zu verwenden, wobei anhand der BIM Daten nicht nur die graphische Darstellung gelöst wird, sondern auch gleich das automatische Verknüpfen der graphischen Daten mit den Datenpunkten der Räume möglich ist. Die graphische Darstellung erlaubt eine gute und schnelle Übersicht aller Raumstatuswerte, weil man das Gebäude sehr schnell drehen und von allen Seiten betrachten kann. Für Räume ohne Fenster muss man entweder die 3D Röntgensicht oder die "Floorplan" Darstellung wählen.

Mit Vorteil ist die Leitstation LS eine Komponente eines Gebäudemanagementsystem das eingerichtet ist zum Darstellen von Statusinformationen eines Gebäudes,
wobei Bauwerksdaten BD des Gebäudes in der Notation eines maschinenlesbaren Gebäudeinformationsmodells BIM für das Gebäudemanagementsystem bereitgestellt sind, wobei das Gebäudeinformationsmodell BIM im Gebäude verbaute Geräte, insbesondere Feldgeräte, umfasst;
wobei eine Projektkonfiguration PK mit Datenpunkten DP von im Gebäude verbauten Geräten, insbesondere Feldgeräten, für das Gebäudemanagementsystem bereitgestellt ist, wobei ein Datenpunkt DP einen aktuellen physikalischen Wert repräsentiert;
wobei das Gebäudemanagementsystem eingerichtet ist, Datenpunkte DP mit den jeweiligen Geräten des Gebäudeinformationsmodells BIM zu verknüpfen; und
wobei das Gebäudemanagementsystem weiter eingerichtet ist, die ausgewählten Datenpunkte DP mit im Gebäudeinformationsmodell hinterlegten Informationen anzureichern und auf einem Ausgabegerät (z.B. Monitor, Bildschirm, Display) darzustellen.

Die Leitstation LS und das Gebäudemanagementsystem umfassen die für eine Gebäudeautomatisierung übliche Hardware (z.B. Prozessor, Kommunikationsmittel, Speicher, Ein-/Ausgabemittel) und Software (z.B. 3D Viewer, Datenbanken).

Mit Vorteil erfolgt das Verknüpfen der ausgewählten Datenpunkte DP auf die jeweiligen Geräte des Gebäudeinformationsmodells über einen Vergleich der Notation der Datenpunkte DP mit der Notation der jeweiligen Geräte des Gebäudeinformationsmodells BIM.

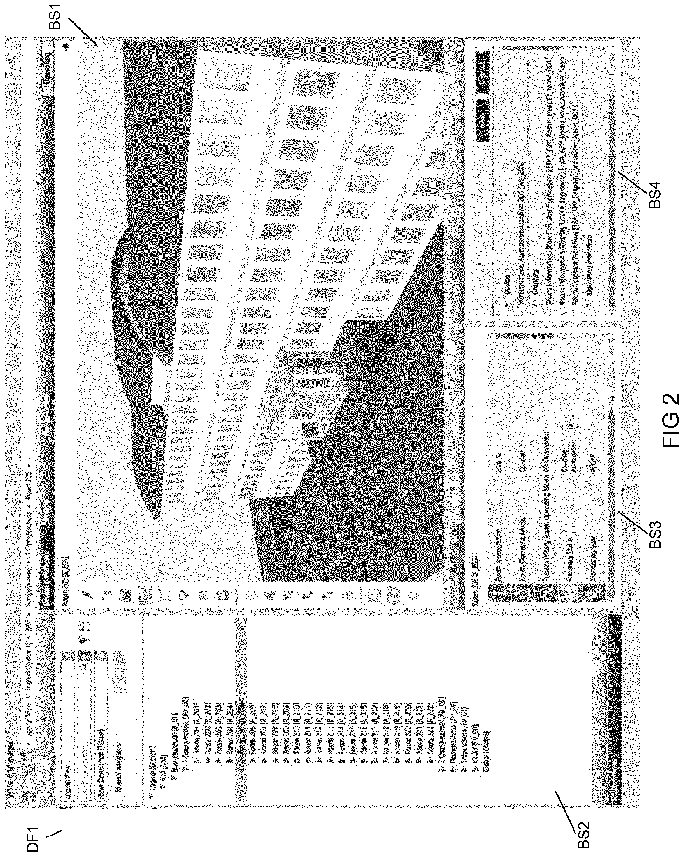

Figur 2 zeigt eine erste beispielhafte Darstellungsform DF1 für eine grafische Ausgabe von Statusinformationen eines Gebäudes auf einem Ausgabegerät. In der Darstellungsform DF1 gemäss Figur 2 sieht man z.B. die Temperaturwerte in einer beispielhaften Grauwertkodierung in den Fenstern des 3D Gebäudes dargestellt (Bildschirmsegment BS1). Der Benutzer kann mit Hilfe des 3D Viewers sehr schnell alle Seiten des Gebäudes anschauen und sich einen Überblick über die Temperaturverteilung im Gebäude beschaffen. Mit Vorteil erfolgt die Darstellung der Temperaturwerte farb-codiert (rot=warm, blau=kühl). In Figur 2 ist auf der linken Seite eine Baumstruktur des Gebäudes dargestellt (Bildschirmsegment BS2). Damit können einzelne Räume oder bestimmte Stockwerke für eine Darstellung ausgewählt werden. Das Auswählen der Darstellungsform und der gewünschten Datenpunkte durch einen Benutzer erfolgt z.B. über weitere in Figur 2 dargestellte Bildschirmsegmente BS3, BS4 mit den entsprechenden Eingabemenüs mit entsprechenden Steuer- und Bedienelementen.

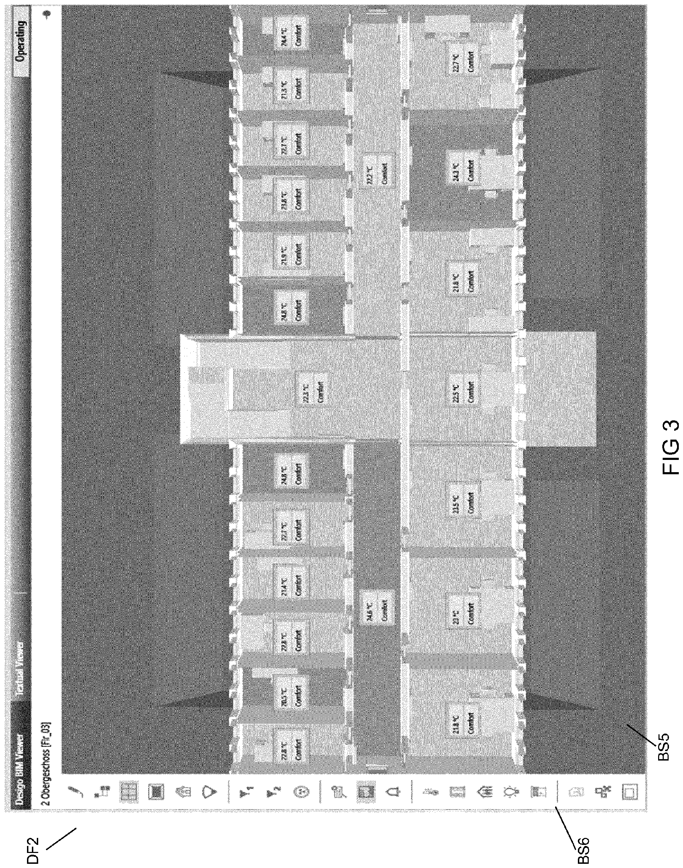

Figur 3 zeigt eine zweite beispielhafte Darstellungsform DF2 für eine grafische Ausgabe von Statusinformationen eines Gebäudes auf einem Ausgabegerät (Monitor, Bildschirm, Display, etc.). In der Darstellung gemäss Figur 3 werden im Bildschirmsegment BS5 die Raumzustände als farbige Böden im Raum dargestellt. Durch grafisches "Abschneiden" des oberen Teils des Gebäudes kann man den Floorplan mit Alarmübersicht (z.B. entsprechend eingefärbte Flächen zeigen einen Alarmzustand an) pro Stockwerk einfach darstellen. Bildschirmsegment BS6 stellt dazu eine Leiste mit entsprechenden Steuer- und Bedienelementen für einen Benutzer bereit.

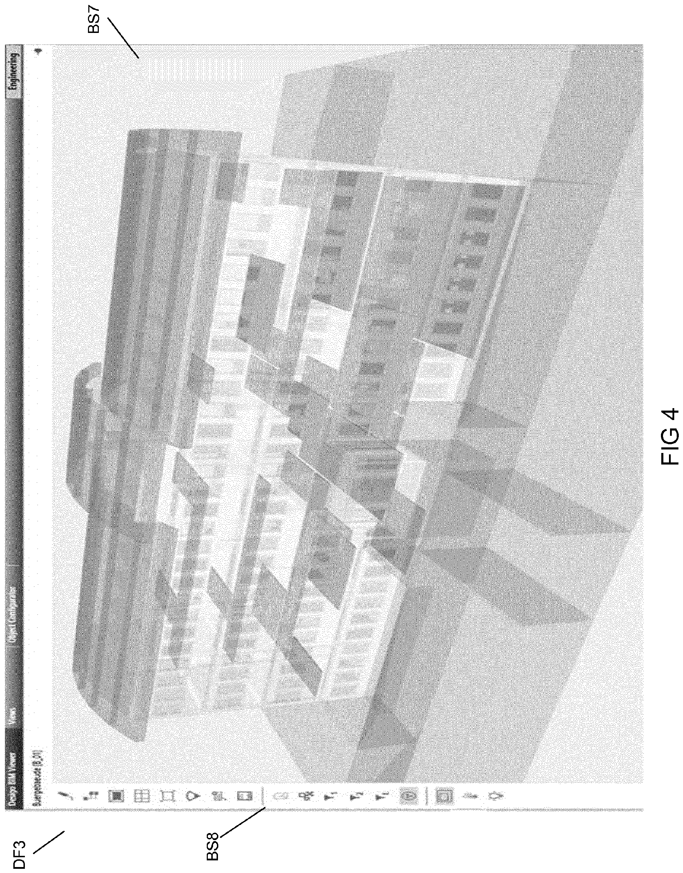

Figur 4 zeigt eine dritte beispielhafte Darstellungsform DF3 mit den Bildschirmsegmenten BS7 und BS8 für eine grafische Ausgabe von Statusinformationen eines Gebäudes auf einem Ausgabegerät. Bildschirmsegment BS7 zeigt eine transparente Darstellung der Gebäudehülle mit grafisch dargestellten Raumalarmzuständen in einer 3D Sicht (dreidimensionaler Darstellung. Bildschirmsegment BS8 stellt dazu eine Leiste mit entsprechenden Steuer- und Bedienelementen für einen Benutzer bereit.

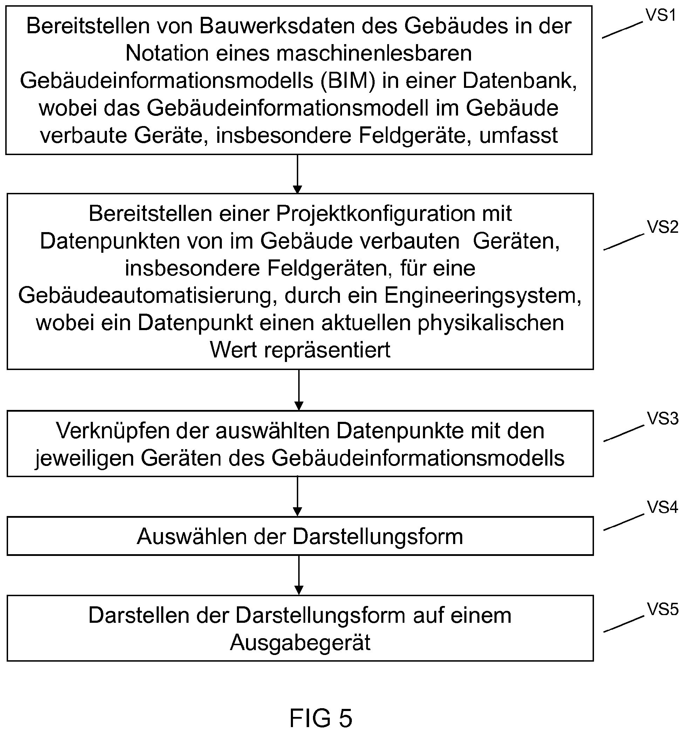

Figur 5 zeigt ein beispielhaftes Flussdiagramm für ein Verfahren zum Darstellen von Statusinformationen eines Gebäudes. Das Verfahren umfassend die folgenden Schritte:
(VS1) Bereitstellen von Bauwerksdaten des Gebäudes in der Notation eines maschinenlesbaren Gebäudeinformationsmodells (BIM) in einer Datenbank, wobei das Gebäudeinformationsmodell im Gebäude verbaute Geräte, insbesondere Feldgeräte, umfasst;
(VS2) Bereitstellen einer Projektkonfiguration mit Datenpunkten von im Gebäude verbauten Geräten, insbesondere Feldgeräten, für eine Gebäudeautomatisierung, durch ein Engineeringsystem, wobei ein Datenpunkt einen aktuellen physikalischen Wert repräsentiert;
(VS3) Verknüpfen der Datenpunkte mit den jeweiligen Geräten des Gebäudeinformationsmodells;
(VS4) Auswählen der Darstellungsform durch einen Benutzer; und
(VS5) Darstellen der Darstellungsform auf einem Ausgabegerät. Das Verfahren lässt sich mit Gebäudeautomatisierungssystemen (z.B. Siemens Desigo CC) realisieren oder auch in ein bestehendes Gebäudeautomatisierungssystem integrieren.

Ein Gebäudeautomatisierungssystem umfasst üblicherweise:
- Mittel zum übergeordneten Bedienen und Beobachten,
- Mittel zur grafischen Prozessvisualisierung,
- Mittel zur automatischen Alarmverteilung,
- Mittel für Datenauswertungen mit standardisierten Protokollen
- Mittel zum Steuern, Regeln sowie Bedienen und Beobachten von Primäranlagen zur Raumregelung,
- Schnittstellen zu den Geräten der Feldebene (Aktorik, Sensorik, Controller). Ein Gebäudeautomatisierungssystem ist mit entsprechender Hardware und Software ausgestattet. Üblicherweise umfasste ein Gebäudeautomatisierungssystem eine Leitstation bzw. eine Managementstation.

Das Gebäudeinformationsmodell (BIM, Building Information Model) ist in einer geeigneten maschinenlesbaren Notation (z.B. IFC-Notation, Industry Foundation Classes) abgelegt.

Mit Vorteil erfolgt das Verknüpfen der Datenpunkte auf die jeweiligen Geräte des Gebäudeinformationsmodells über einen Vergleich der Notation der Datenpunkte mit der Notation der jeweiligen Geräte des Gebäudeinformationsmodells.

Mit Vorteil werden die Datenpunkte der Geräte und Feldgeräte des Gebäudes in Echtzeit bereitgestellt.

Mit Vorteil erfolgen die Schritte Auswählen, Abbilden, und Darstellen der ausgewählten Datenpunkte durch ein Gebäudemanagementsystem.

Mit Vorteil werden im Falle, dass der Wert eines Datenpunktes einen Alarm darstellt, das durch den Alarm betroffene Gerät im Gebäudeinformationsmodell dargestellt.

Mit Vorteil erfolgt das Darstellen der Datenpunkte raumspezifisch.

Erfindungsgemäß erfolgt ein Nachführen der Projektkonfiguration in Abhängigkeit von Änderungen des Gebäudeinformationsmodells (BIM). Erfindungsgemäß erfolgt das Nachführen durch eine automatische Push-Funktionalität.

Mit Vorteil werden, basierend auf entsprechenden Daten des Gebäudeinformationsmodells und aktuellen und historischen Werten von Datenpunkten Aussagen zum Energieverbrauch im Gebäude grafisch dargestellt. Somit kann eine Prognose (Forecast) für einen zukünftigen Energieverbrauch für das Gebäude, aber auch stockwerkspezifisch, erstellt werden. Auch können dadurch Bereiche im Gebäude mit Energieverlusten erkannt werden.

Verfahren und Gebäudemanagementsystem zum Darstellen von Statusinformationen eines Gebäudes, wobei Bauwerksdaten des Gebäudes in der Notation eines maschinenlesbaren Gebäudeinformationsmodells (BIM) für das Gebäudemanagementsystem bereitgestellt werden, wobei das Gebäudeinformationsmodell im Gebäude verbaute Geräte, insbesondere Feldgeräte, umfasst; wobei eine Projektkonfiguration mit Datenpunkten von im Gebäude verbauten Geräten, insbesondere Feldgeräten, für das Gebäudemanagementsystem bereitgestellt ist, wobei ein Datenpunkt einen aktuellen physikalischen Wert repräsentiert; wobei das Gebäudemanagementsystem eingerichtet ist, Datenpunkte mit den jeweiligen Geräten des Gebäudeinformationsmodells zu verknüpfen; und wobei das Gebäudemanagementsystem weiter eingerichtet ist, die Datenpunkte mit im Gebäudeinformationsmodell hinterlegten Informationen anzureichern und auf einem Ausgabegerät darzustellen.

### Bezugszeichen

- DF1 - DF3: Darstellungsform
- BS1 - BS8: Bildschirmsegment
- BIM: Gebäudeinformationsmodell
- IFC: Industy Foundation Classes
- DB1, DB2: Datenbank
- LS: Leitstation
- FG1 - FGn: Feldgerät
- ES: Engineering System
- KP: Kundenprojekt
- BD: Bauwerksdaten
- DP: Datenpunkt
- PK: Projektkonfiguration
- VS1 - VS5: Verfahrensschritt

## Patentansprüche

1. Verfahren zum Darstellen von Statusinformationen eines Gebäudes, das Verfahren umfassend die folgenden Schritte:
(VS1) Bereitstellen von Bauwerksdaten (BD) des Gebäudes in der Notation eines maschinenlesbaren Gebäudeinformationsmodells (BIM) in einer Datenbank, wobei das Gebäudeinformationsmodell (BIM) im Gebäude verbaute Geräte, insbesondere Feldgeräte (FG1 - FGn), umfasst;
(VS2) Bereitstellen einer Projektkonfiguration (PK) mit Datenpunkten (DP) von im Gebäude verbauten Geräten, insbesondere Feldgeräten (FG1 - FGn), für eine Gebäudeautomatisierung durch ein Engineeringsystem (ES), wobei ein Datenpunkt (DP) einen aktuellen physikalischen Wert repräsentiert;
(VS3) Verknüpfen der Datenpunkte (DP) mit den jeweiligen Geräten des Gebäudeinformationsmodells (BIM);
(VS4) Auswählen einer Darstellungsform (DF1 - DF3) durch einen Benutzer; und
(VS5) Darstellen der ausgewählten Darstellungsform (DF1 - DF3) auf einem Ausgabegerät,
wobei das Verknüpfen der Datenpunkte (DP) auf die jeweiligen Geräte des Gebäudeinformationsmodells (BIM) über einen Vergleich der Notation der Datenpunkte (DP) mit der Notation der jeweiligen Geräte des Gebäudeinformationsmodells (BIM) automatisch erfolgt,
und wobei für die Bezeichnung der Datenpunkte in der Projektkonfiguration und für die Bezeichnungen der Elemente im Gebäudeinformationsmodell (BIM) reguläre Ausdrücke mit demselben Zeichenvorrat mit einer entsprechenden Syntax und Grammatik verwendet werden,
**dadurch gekennzeichnet, dass** das Verknüpfen der Datenpunkte mit den jeweiligen Geräten des Gebäudeinformationsmodells auf einer unscharfen Suche basiert,
wobei ein Nachführen der Projektkonfiguration (PK) in Abhängigkeit von Änderungen des Gebäudeinformationsmodells (BIM) durch eine automatische Push-Funktionalität erfolgt.

2. Verfahren nach Anspruch 1, wobei die Datenpunkte (DP) in Echtzeit bereitgestellt werden.

3. Verfahren nach einem der vorstehenden Ansprüche, wobei das Gebäudeinformationsmodells (BIM) in IFC-Notation hinterlegt ist.

4. Verfahren nach einem der vorstehenden Ansprüche, wobei die Schritte Auswählen, Abbilden und Darstellen der ausgewählten Datenpunkte (DP) durch ein Gebäudemanagementsystem erfolgt.

5. Verfahren nach einem der vorstehenden Ansprüche, wobei im Falle, dass der Wert eines Datenpunktes (DP) einen Alarm darstellt, das durch den Alarm betroffene Gerät im Gebäudeinformationsmodell (BIM) optisch hervorgehoben wird.

6. Verfahren nach einem der vorstehenden Ansprüche, wobei das Darstellen der Datenpunkte (DP) raumspezifisch erfolgt.

7. Verfahren nach einem der vorstehenden Ansprüche, wobei basierend auf entsprechenden Daten des Gebäudeinformationsmodells (BIM) und aktuellen und historischen Werten von Datenpunkten (DP) Aussagen zum Energieverbrauch im Gebäude grafisch dargestellt werden.

8. Gebäudemanagementsystem, das eingerichtet ist zum Darstellen von Statusinformationen eines Gebäudes,
wobei Bauwerksdaten (BD) des Gebäudes in der Notation eines maschinenlesbaren Gebäudeinformationsmodells (BIM) für das Gebäudemanagementsystem bereitgestellt sind, wobei das Gebäudeinformationsmodell (BIM) im Gebäude verbaute Geräte, insbesondere Feldgeräte (FG1 - FGn), umfasst;
wobei eine Projektkonfiguration (PK) mit Datenpunkten (DP) von im Gebäude verbauten Geräten, insbesondere Feldgeräten (FG1 - FGn), für das Gebäudemanagementsystem bereitgestellt ist, wobei ein Datenpunkt (DP) einen aktuellen physikalischen Wert repräsentiert;
wobei das Gebäudemanagementsystem (BIM) eingerichtet ist, Datenpunkte (DP) mit den jeweiligen Geräten des Gebäudeinformationsmodells (BIM) zu verknüpfen; und
wobei das Gebäudemanagementsystem weiter eingerichtet ist, die Datenpunkte (DP) mit im Gebäudeinformationsmodell (BIM) hinterlegten Informationen anzureichern und auf einem Ausgabegerät darzustellen,
wobei das Verknüpfen der Datenpunkte (DP) auf die jeweiligen Geräte des Gebäudeinformationsmodells (BIM) über einen Vergleich der Notation der Datenpunkte (DP) mit der Notation der jeweiligen Geräte des Gebäudeinformationsmodells (BIM) automatisch erfolgt,
und wobei für die Bezeichnung der Datenpunkte in der Projektkonfiguration und für die Bezeichnungen der Elemente im Gebäudeinformationsmodell (BIM) reguläre Ausdrücke mit demselben Zeichenvorrat mit einer entsprechenden Syntax und Grammatik verwendet werden
**dadurch gekennzeichnet, dass** das Verknüpfen der Datenpunkte mit den jeweiligen Geräten des Gebäudeinformationsmodells auf einer unscharfen Suche basiert,
wobei ein Nachführen der Projektkonfiguration (PK) in Abhängigkeit von Änderungen des Gebäudeinformationsmodells (BIM) durch eine automatische Push-Funktionalität erfolgt.

## Claims

1. Method for displaying status information of a building, the method comprising the following steps:
(VS1) providing building data (BD) from the building in the notation of a machine-readable building information model (BIM) in a database, wherein the building information model (BIM) comprises devices installed in the building, in particular field devices (FG1 - FGn);
(VS2) providing a project configuration (PK) with data points (DP) from the devices installed in the building, in particular field devices (FG1 - FGn), for building automation by way of an engineering system (ES), wherein a data point (DP) represents a current physical value;
(VS3) linking the data points (DP) to the respective devices of the building information model (BIM);
(VS4) selecting a display format (DF1 - DF3) by a user; and
(VS5) displaying the selected display format (DF1 - DF3) on an output device,
wherein
the linking of the data points (DP) to the respective devices of the building information model (BIM) takes place automatically by comparing the notation of the data points (DP) with the notation of the respective devices of the building information model (BIM),
and wherein regular expressions with the same character set with corresponding syntax and grammar are used to identify the data points in the project configuration and for identifying the elements in the building information model (BIM),
**characterised in that**,
linking the data points to the respective devices of the building information model is based on a fuzzy search,
wherein updating the project configuration (PK) takes place depending on changes to the building information model (BIM) by way of an automatic push functionality.

2. Method according to claim 1, wherein the data points (DP) are provided in real time.

3. Method according to one of the preceding claims, wherein the building information model (BIM) is stored in IFC notation.

4. Method according to one of the preceding claims, wherein the steps of selecting, mapping and displaying the selected data points (DP) takes place by way of a building management system.

5. Method according to one of the preceding claims, wherein in the event that the value of a data point (DP) displays an alarm, the device affected by the alarm is optically marked in the building information model (BIM).

6. Method according to one of the preceding claims, wherein data points (DP) are displayed room-specifically.

7. Method according to one of the preceding claims, wherein information about energy consumption in the building is displayed in graphical form based on corresponding data of the building information model (BIM) and current and historical values of data points (DP).

8. Building management system, which is configured to display status information of a building,
wherein building data (BD) from the building is provided in the notation of a machine-readable building information model (BIM) for the building management system, wherein the building information model (BIM) comprises devices installed in the building, in particular field devices (FG1 - FGn);
wherein a project configuration (PK) with data points (DP) from devices installed in the building, in particular field devices (FG1 - FGn), is provided for the building management system, wherein a data point (DP) represents a current physical value;
wherein the building management system (BIM) is configured to link data points (DP) to the respective devices of the building information model (BIM); and
wherein the building management system is further configured to supplement the data points (DP) with information stored in the building information model (BIM) and display said information on an output device,
wherein
linking the data points (DP) to the respective devices of the building information model (BIM) takes place automatically by way of a comparison of the notation of the data points (DP) with the notation of the respective devices of the building information model (BIM),
and wherein regular expressions with the same character set with corresponding syntax and grammar are used to identify the data points in the project configuration and for identifying the elements in the building information model (BIM),
**characterised in that**,
linking the data points to the respective devices of the building information model is based on a fuzzy search,
wherein updating the project configuration (PK) takes place depending on changes to the building information model (BIM) by way of an automatic push functionality.

## Revendications

1. Procédé de représentation des données d'état d'un bâtiment, le procédé comportant les étapes suivantes :
(VS1) mise à disposition de données de construction (BD) du bâtiment dans la notation d'un modèle des données du bâtiment (BIM) lisible par ordinateur dans une base de données, le modèle des données du bâtiment (BIM) comprenant des appareils montés dans le bâtiment, en particulier des appareils de terrain (FG1-FGn) ;
(VS2) mise à disposition d'une configuration du projet (PK) comportant des points de données (DP) d'appareils montés dans le bâtiment, en particulier d'appareils de terrain (FG1-FGn), pour l'automatisation du bâtiment par un système d'ingénierie (ES) dans lequel un point de données (DP) représente une valeur physique actuelle ;
(VS3) connexion des points de données (DP) aux appareils correspondants du modèle des données du bâtiment (BIM) ;
(VS4) sélection d'un format d'affichage (DF1- DF3) par un utilisateur ; et
(VS5) représentation du format d'affichage choisi (DF1-DF3) sur un périphérique de sortie,
dans lequel
l'association des points de données (DP) aux appareils correspondants du modèle des données du bâtiment (BIM) se fait automatiquement grâce à une comparaison de la notation des points de données (DP) avec la notation des appareils correspondants du modèle des données du bâtiment (BIM),
des expressions régulières comportant le même jeu de caractères ayant une syntaxe et une grammaire correspondantes étant utilisées pour la désignation des points de données dans la configuration du projet et pour les désignations des éléments dans le modèle des données du bâtiment (BIM), **caractérisé en ce que** l'association des points de données aux appareils correspondants du modèle des données du bâtiment se base sur une recherche floue,
la configuration du projet (PK) étant mise à jour en fonction des modifications apportées au modèle des données du bâtiment (BIM) grâce à une fonctionnalité push automatique.

2. Procédé selon la revendication 1, dans lequel les points de données (DP) sont mis à disposition en temps réel.

3. Procédé selon l'une des revendications précédentes, dans lequel le modèle des données du bâtiment (BIM) est stocké sous forme de notation IFC.

4. Procédé selon l'une des revendications précédentes, dans lequel les étapes de sélection, de représentation et d'affichage des points de données (DP) sélectionnés se font par un système de gestion du bâtiment.

5. Procédé selon l'une des revendications précédentes, dans lequel, au cas où la valeur d'un point de données (DP) représente une alerte, l'appareil concerné par l'alerte est mis en relief optiquement dans le modèle des données du bâtiment (BIM).

6. Procédé selon l'une des revendications précédentes, dans lequel la représentation des points de données se fait spécifiquement par locaux.

7. Procédé selon l'une des revendications précédentes, dans lequel, sur la base de données correspondantes du modèle des données du bâtiment (BIM) et de valeurs actuelles et historiques de points de données (DP), des affirmations relatives à la consommation d'énergie dans le bâtiment sont représentées visuellement.

8. Système de gestion de bâtiment conçu pour représenter des données d'état d'un bâtiment, dans lequel
des données de bâtiment (BD) du bâtiment dans la notation d'un modèle des données du bâtiment (BIM) lisible par ordinateur sont mises à disposition au système de gestion de bâtiment, le modèle des données du bâtiment (BIM) comporte des appareils montés dans le bâtiment, en particulier des appareils de terrain (FG1-FGn) ;
une configuration de projet (PK) comportant des points de données (DP) des appareils montés dans le bâtiment, en particulier d'appareils de terrain (FG1-FGn) est mise à disposition au système de gestion de bâtiment, un point de données (DP) représentant une valeur physique actuelle ;
le système de gestion de bâtiment (BIM) étant apte à associer des points de données (DP) aux appareils correspondants du système des données du bâtiment (BIM) ; et
le système de gestion de bâtiment étant par ailleurs configuré pour enrichir les points de données (DP) par les données stockées dans le système des données du bâtiment (BIM) et les représenter sur un périphérique de sortie,
l'association des points de données (DP) aux appareils correspondants du modèle des données du bâtiment (BIM) se faisant automatiquement par une comparaison de la notation des points de données (DP) avec la notation des appareils correspondants du modèle des données du bâtiment (BIM),
des expressions régulières comportant le même jeu de caractères ayant une syntaxe et une grammaire correspondantes étant utilisées pour la désignation des points de données dans la configuration du projet et pour les désignations des éléments dans le modèle des données du bâtiment (BIM),
**caractérisé en ce que** l'association des points de données aux appareils correspondants du modèle des données du bâtiment est basée sur une recherche floue,
la configuration du projet (PK) étant mise à jour en fonction des modifications apportées au modèle des données du bâtiment (BIM) grâce à une fonctionnalité push automatique.
